# EUROPÄISCHE PATENTSCHRIFT

(11) **EP 0 874 185 B1**
(45) Veröffentlichungstag und Bekanntmachung des Hinweises auf die Patenterteilung: **15.01.2003**
(21) Anmeldenummer: 98107417.2
(22) Anmeldetag: 23.04.1998
(51) Int. Cl.: F16L 39/02, F16L 11/20, B67D 5/04

(54) **Schlauchleitung für eine Kraftstoffzapfanlage**
Hose for fuel dispenser
Tuyau souple pour une pompe à essence

(30) Priorität: 24.04.1997 DE 19717182
(43) Veröffentlichungstag der Anmeldung: 28.10.1998
(73) Patentinhaber: Klenk GmbH, 88285 Bodnegg-Rotheidlen (DE)
(72) Erfinder: Kessler, Walter, 88069 Tettnang (DE); Krug, Lothar, Dipl.-Ing. (FH), 88239 Wangen-Roggenzell (DE); Heinle, Martin, Dipl.-Ing. (FH), 88316 Isny (DE); Amann, Anton, Dipl.-Ing., 88255 Baindt (DE)
(74) Vertreter: Patentanwälte Eisele, Otten, Roth & Dobler

(56) Entgegenhaltungen:
- US-A- 3 980 112
- US-A- 4 111 466
- US-A- 5 285 826

## Beschreibung

Die Erfindung betrifft eine Schlauchleitung für eine Kraftstoffzapfanlage einer Tankstelle, nach dem Oberbegriff des Anspruchs 1.

Bei der Installation von Versorgungsleitungen für flüssige Güter sind bereits doppelwandige Systeme handelsüblich, bei denen der Flüssigkeitstransport durch ein Innenrohr stattfindet, das von einem Außenrohr ummantelt ist. Der Zwischenraum zwischen dem Innenrohr und dem Außenrohr wird mit einem Über- oder Unterdruck beaufschlagt und an einen Drucksensor angeschlossen. Über diesen Drucksensor ist eine entsprechende Steuerung in der Lage, Leckagen im Innenrohr zu detektieren, da dies Auswirkungen auf den Druck im Zwischenraum zwischen dem Innenrohr und dem Außenrohr hat. Die bekannten Rohrsysteme sind für die feste Installation geeignet, jedoch nicht für die Anwendung an einer Zapfsäule einer Tankstelle verwendbar.

Weiterhin ist eine Versorgungsleitung im Handel erhältlich, bei der ein Wellschlauch von einem Kunststoffmantel umhüllt ist. Zwischen dem Wellschlauch und dem Kunststoffmantel ergibt sich wiederum ein Zwischenraum, der zu Zwecken der Leckkontrolle mit Über- oder Unterdruck beaufschlagbar ist. Auch dieser Metallwellschlauch ist nicht für den Einsatz an einer Zapfsäule geeignet, da er zwar flexibel verlegbar ist, jedoch in der Häufigkeit der möglichen Biegungen eingeschränkt und somit nicht dauerhaft flexibel ist. Er ist für die flexible Verlegung vorgesehen, wobei er nach der Verlegung fest installiert ist.

In der Druckschrift US-A-4,111,466 wird eine doppelwandige Schlauchleitung zur Verfüllung und Entleerung von Tankschiffen beschrieben, bei der eine Drucküberwachung des Zwischenraumes der doppelten Schlauchleitung stattfindet. Der Druck im Zwischenraum dient als Gegendruck für den Pumpdruck im Innenschlauch. Infolgedessen wird die Doppelwandigkeit dazu benutzt, um höhere Pumpdrücke und somit größere Durchsatzgeschwindigkeiten zu erzielen. Weiterhin dient die Doppelwandigkeit dazu, im Falle eines Lecks im Innenschlauch austretendes Öl mit dem Außenschlauch aufzufangen und somit die Kontamination der Umgebung zu vermeiden. Im Falle eines Druckverlustes aufgrund eines Risses des Außenschlauchs wird der Pumpvorgang gestoppt.

Bei diesem Stand der Technik findet eine Lecküberwachung des Außenschlauches durch einen Überdruck im Zwischenraum statt. Für den Einsatz einer Tankstelle ist eine solche Schlauchleitung nicht geeignet.

Demgegenüber hat die Erfindung die Aufgabe, eine flexible Leitung vorzuschlagen, die für den Einsatz an einer Zapfsäule einer Tankstelle geeignet ist.

Diese Aufgabe wird ausgehend von einem Stand der Technik der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Schlauchleitung dadurch aus, daß ein flexibler Innenschlauch im Innern eines flexiblen Außenschlauchs angeordnet ist, so daß sich ein Zwischenraum zwischen den beiden Schläuchen ergibt. Die hieraus resultierende Schlauchleitung weist einen durch ein Gas oder eine Flüssigkeit mit Unterdruck beaufschlagbaren Zwischenraum zwischen dem Innen- und Außenschlauch auf, so daß die Kontrollmöglichkeit etwaiger Leckagen mit Hilfe eines Unterdrucksensors besteht.

Zum Anschluß der doppelten Schlauchleitung wird in einer vorteilhaften Ausführungsform ein Anschlußstück verwendet, das eine Durchführung für das Fördermedium sowie eine Durchführung für ein Überwachungsmedium aufweist, wobei Anschlußmittel zur dichten Befestigung sowohl des Innenschlauchs als auch des Außenschlauchs vorgesehen sind. Mit einem derartigen Anschlußstück ist eine Nutzung als Förderleitung mit Hilfe der einen Durchführung für das Fördermedium gewährleistet. Die zweite Durchführung für ein Überwachungsmedium kann auf verschiedene Weise genutzt werden. So kann beispielsweise an diese Durchführung ein Lecküberwachungsgerät angeschlossen werden. Im Falle eines Verbindungsstücks zwischen zwei Schlauchleitungen kann die Durchführung für das Überwachungsmedium so ausgebildet werden, daß die Zwischenräume der beiden Schlauchverbindungen zwischen dem jeweiligen Innen- bzw. Außenschlauch miteinander verbunden werden, so daß sich eine Druckänderung im Zwischenraum der einen Schlauchleitung auch im Zwischenraum der zweiten Schlauchleitung bemerkbar macht.

Wie bereits oben angedeutet, wird in einer besonderen Ausführungsform am Anschlußstück eine Anschlußvorrichtung für eine weitere Schlauchleitung und/oder ein sonstiges Bauteil vorgesehen. Ein derartiges Bauteil kann beispielsweise eine Zapfpistole an einer Tankstelle sein. Es könnte jedoch auch ein anderweitig ausgestaltetes Ventil sein, beispielsweise an einem Förderschlauch zwischen einem Tankwagen und einem Vorratstank.

Vorteilhafterweise wird bei einem Anschlußstück der genannten Art eine Anschlußtülle vorgesehen, auf das der Außenschlauch aufschiebbar und in das der Innenschlauch einschiebbar ist. Auf diese Weise ist es besonders einfach, jeden der beiden Schläuche stirnseitig dicht abzuschließen oder mit weiteren Anschlußmöglichkeiten zu versehen.

Der Außenschlauch wird in einer bevorzugten Ausführungsform über eine Spannschelle fest an die Anschlußtülle angepreßt. Die Anschlußtülle, die vorteilhafterweise hierzu ein gezahntes Profil aufweist, dichtet somit den Außenschlauch stirnseitig ab.

Vorteilhafterweise wird der Innenschlauch im Innern der Anschlußtülle befestigbar ausgebildet, wobei ein Hohlraum zwischen der Anschlußtülle und dem Innenschlauch vorgesehen ist, gegenüber dem der Innenschlauch abgedichtet ist. Somit wird am Anschlußstück nicht nur der Außenschlauch dicht befestigt, sondern es wird zugleich der Innenschlauch getrennt vom Zwischenraum dicht angeschlossen. Weiterhin ergibt sich durch den Hohlraum zwischen der Anschlußtülle und dem Innenschlauch die Möglichkeit, am Anschlußstück eine Druckleitung anzubringen, die in diesen Hohlraum mündet und somit die Lecküberwachung durch Druckkontrolle zwischen den beiden Schläuchen ermöglicht.

Für den Anschluß eines solchen Drucksensors bzw. einer derartigen Leckkontrollvorrichtung wird vorzugsweise eine Anschlußbohrung im Anschlußstück angebracht, die in den genannten Hohlraum einmündet. In einer vorteilhaften Ausführungsform wird in diese Anschlußbohrung ein Innengewinde angebracht, so daß eine entsprechende Leckkontrolleitung problemlos und gegebenenfalls unter zusätzlicher Verwendung einer Dichtung einschraubbar ist.

In einer weiteren vorteilhaften Ausführungsform der Erfindung wird eine Einschraubtülle zur Befestigung und Abdichtung des Innenschlauches vorgesehen. Für diese Einschraubtülle wird an der von der Schlauchleitung weggewandten Seite des Anschlußstücks vorzugsweise eine Gewindebohrung vorgesehen. Die Einschraubtülle wird in diese Gewindebohrung eingeschraubt und erfaßt nach dem Durchtritt in den Innenraum des Anschlußstücks den Innenschlauch. Durch Verschrauben des Gewindes der Einschraubtülle mit dem Innenschlauch wird dieser zugleich befestigt und abgedichtet.

Vorteilhafterweise weist die Einschraubtülle eine Durchgangsbohrung auf, um die obenerwähnte Durchführung für das Fördermedium auszubilden.

Die Einschraubtülle wird vorzugsweise mit endseitigen Anschlußmitteln für den Anschluß weiterer Komponenten, beispielsweise einer Zapfpistole, vorgesehen. Mit diesen Anschlußmitteln könnte auch ein weiteres Anschlußstück wie beschrieben angeschlossen werden, um eine Schlauchverbindung zwischen zwei Schlauchleitungen herzustellen. In diesem Fall müßten zusätzlich die mit dem Zwischenraum zwischen den beiden Schläuchen in Verbindung stehenden Hohlräume der Anschlußstücke miteinander in Verbindung gebracht werden. Die endseitigen Anschlußmittel der Einschraubtülle umfassen in einer besonderen Ausführungsform ein Einschraubgewinde, in das gegebenenfalls eine Dichtung einzulegen ist.

Zur notwendigen Abdichtung des Hohlraums zwischen dem Innenschlauch und der Anschlußtülle wird vorzugsweise eine Dichtung zwischen die Einschraubtülle und das Anschlußstück eingelegt. Hierzu werden vorteilhafterweise entsprechende Dichtflächen, beispielsweise in Form von Ringschultern oder Ringanschlägen, vorgesehen.

Ein Ausführungsbeispiel der Erfindung ist in der Zeichnung dargestellt und wird anhand der Figuren nachfolgend näher erläutert.

Im einzelnen zeigen
- Fig. 1: eine schematische Darstellung einer erfindungsgemäßen Schlauchleitung mit einem Anschlußstück,
- Fig. 2: eine schematische Darstellung einer erfindungsgemäßen Schlauchleitung mit einem Übergangsstück,
- Fig. 3: eine teilweise geschnittene Darstellung eines Ausführungsbeispiels einer erfindungsgemäßen Schlauchleitung mit Anschlußstück,
- Fig. 4: ein Anschlußstück gemäß Fig. 3 und
- Fig. 5: eine Einschraubtülle für ein Anschlußstück gemäß Fig. 4.

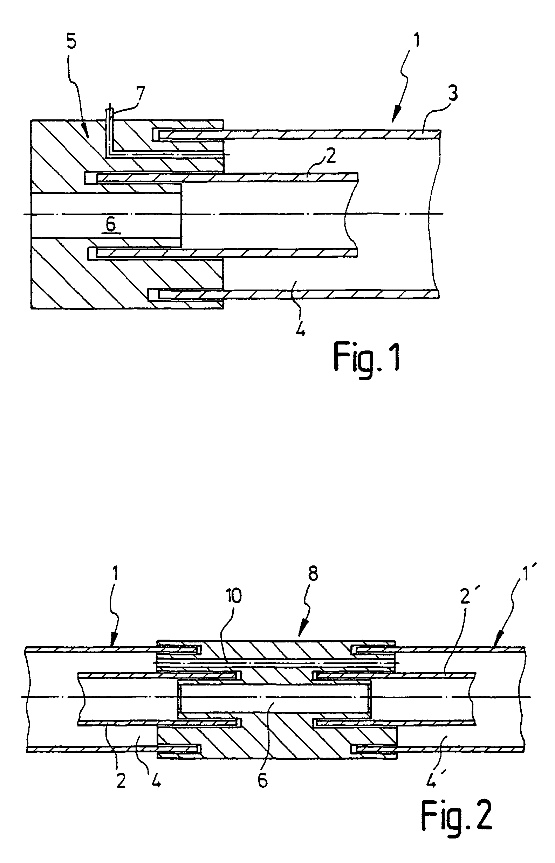

Die Schlauchleitung 1 gemäß Fig. 1 umfaßt einen Innenschlauch 2 sowie einen Außenschlauch 3. Zwischen dem Innenschlauch 2 und dem Außenschlauch 3 ergibt sich somit ein Zwischenraum 4, der zur Lecküberwachung nutzbar, insbesondere mit Unter- oder Überdruck beaufschlagbar ist. Ein Anschlußstück 5 umfaßt einen Durchgangskanal 6, der den Innenschlauch 2 mit nicht näher dargestellten weiteren Anschlußkomponenten verbindet.

Im Anschlußstück 5 ist eine Bohrung 7 vorgesehen, mittels der der Zwischenraum 4 zwischen dem Innenschlauch 2 und dem Außenschlauch 3 an ein nicht näher dargestelltes Leckwarngerät angeschlossen werden kann. Die Abdichtung des Innenschlauchs 2 bzw. des Außenschlauchs 3 zu dem Anschlußstück 5 kann beispielsweise über nicht näher dargestellte Schraubgewinde oder sonstige Dichtmittel realisiert werden.

Das Übergangsstück 8 gemäß Fig. 2 entspricht im wesentlichen dem Anschlußstück 5. Es ist jedoch symmetrisch aufgebaut, da es zur Verbindung zweier Schlauchleitungen 1, 1' dient. Dementsprechend verläuft ein Durchgangskanal 9 von einem Innenschlauch 2 zum anderen Innenschlauch 2'. Ebenso sind die Zwischenräume 4 bzw. 4' der Schlauchleitungen 1, 1' über eine durchgehende Verbindungsbohrung 10 miteinander verbunden.

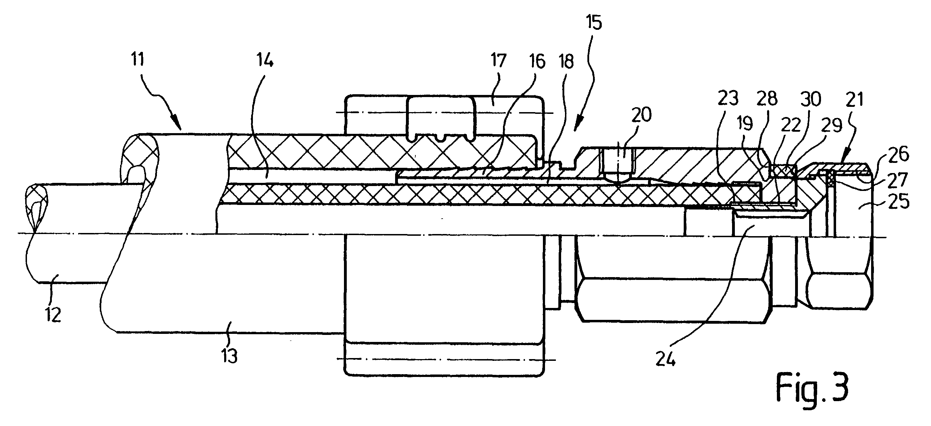

Die Schlauchleitung 11 gemäß Fig. 3 umfaßt wiederum einen Innenschlauch 12 sowie einen Außenschlauch 13, zwischen denen sich wiederum ein Zwischenraum 14 bildet. Das Anschlußstück 15 umfaßt vorliegend eine Anschlußtülle 16, auf deren verzahntem Außenprofil der Außenschlauch 3 aufgeschoben und mittels einer Spannschelle 17 verspannt ist. Der Zwischenraum 14 setzt sich in einem Hohlraum 18 im Innern des Anschlußstücks 15 fort, in das der Innenschlauch 12 bis zu einem stirnseitigen Ringanschlag 19 eingeschoben ist. Eine Anschlußbohrung 20 mit Innengewinde ermöglicht es, den Hohlraum 18 mit einem Leckwarngerät zu verbinden.

Stirnseitig ist eine Einschraubtülle 21 in eine Gewindebohrung 22 des Anschlußstücks 15 eingeschraubt. Die Einschraubtülle 21 setzt sich im Innern des Anschlußstücks 15 fort und ist mit ihrem Außengewinde 23 am Innenschlauch 12 befestigt. Durch Einschrauben des Außengewindes 23 in den Innenschlauch 12 ergibt sich zugleich eine dichte Verbindung des Innenschlauchs 12 an der Einschraubtülle 21. Die Einschraubtülle 21 weist eine Durchgangsbohrung 24 auf, mit der der Innenschlauch 12 mit weiteren Baukomponenten verbunden wird, die über ein Anschlußteil 25 angeschlossen werden können. Eine derartige Baukomponente kann beispielsweise in Form einer Zapfpistole vorliegen. Das Anschlußteil 25 besteht im wesentlichen aus einem Einschraubgewinde 26 sowie einer eingelegten Dichtung 27.

Zwischen einer Ringschulter 28 am Anschlußstück 12 sowie einem Ringanschlag 29 an der Einschraubtülle 21 ist eine Dichtung 30 eingelegt, um den Hohlraum 18 vollständig stirnseitig abzudichten.

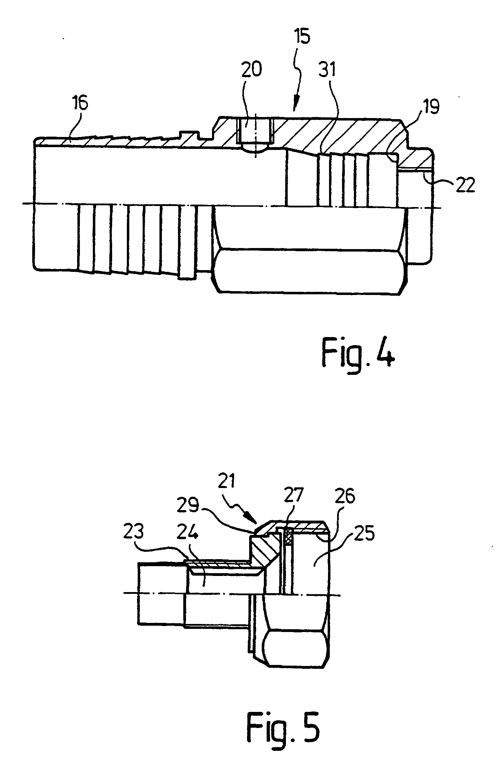

Wie insbesondere in Fig. 4 erkennbar ist, ist das Anschlußstück 15 innenseitig mit einem Zahnprofil 31 versehen, an das der Innenschlauch 12 beim Einschrauben der Einschraubtülle 21 angedrückt und somit mechanisch fest verankert wird.

Die beiden Schläuche, d. h. der Innenschlauch 2 sowie der Außenschlauch 3, werden bevorzugt als Druckschläuche mit einer Gewebeeinlage, beispielsweise nach DIN 2823 ausgebildet.

Durch eine Schlauchleitung gemäß der Erfindung ist es möglich, dauerhaft flexible Leitungen, insbesondere als Zapfschläuche einer Tankstellenanlage oder zur Befüllung von Vorratstanks aus einem Tankwagen usw. zu verwenden, wobei aufgrund der doppelwandigen Ausführung eine Lecküberwachung möglich ist. Die Lecküberwachung kann durch Beaufschlagung mit Über- oder Unterdruck durchgeführt, wobei als Überwachungsmedium sowohl ein Gas als auch eine Flüssigkeit in Betracht kommt. Neben den dargestellten Ausführungsbeispielen kommen auch weitere Anschlußstücke in Betracht, wobei wesentlich ist, daß eine dichte Verbindung sowohl zu dem jeweiligen Innen- bzw. Außenschlauch herstellbar ist, daß eine Durchführung für das Fördermedium, beispielsweise Benzin, Dieselkraftstoff, Heizöl oder dgl., sowie eine Durchführung für das Überwachungsmedium vorhanden ist.

Die Anschlußbohrung 20 kann zugleich als Sichtfenster für die Montage des Innenschlauchs 12 verwendet werden. Bei der Befestigung des Innenschlauchs 12 kann durch die Bohrung 20 kontrolliert werden, ob der Innenschlauch 12 die erforderliche Einstecktiefe aufweist. Gegebenenfalls kann der Innenschlauch 12 hierzu in geeigneter Weise markiert werden, so daß diese Markierung durch die Anschlußbohrung 20 sichtbar ist. In einer weiteren Ausführung ist es jedoch auch denkbar, ein separates Sichtfenster zur Kontrolle der Einstecktiefe anzubringen.
- 1: Schlauchleitung
- 2: Innenschlauch
- 3: Außenschlauch
- 4: Zwischenraum
- 5: Anschlußstück
- 6: Durchgangskanal
- 7: Bohrung
- 8: Übergangsstück
- 9: Durchgangskanal
- 10: Verbindungsbohrung
- 11: Schlauchleitung
- 12: Innenschlauch
- 13: Außenschlauch
- 14: Zwischenraum
- 15: Anschlußstück
- 16: Anschlußtülle
- 17: Spannschelle
- 18: Hohlraum
- 19: Ringanschlag
- 20: Anschlußbohrung
- 21: Einschraubtülle
- 22: Gewindebohrung
- 23: Außengewinde
- 24: Durchgangsbohrung
- 25: Anschlußteil
- 26: Einschraubgewinde
- 27: Dichtung
- 28: Ringschulter
- 29: Ringanschlag
- 30: Dichtung
- 31: Zahnprofil

## Patentansprüche

1. schlauchleitung für eine Kraftstoffzapfanlage einer Tankstelle, eines Tankwagens oder dergleichen, wobei ein flexibler Innenschlauch (2, 12) im Innern eines flexiblen Außenschlauchs (3, 13) angeordnet ist, so dass sich ein Zwischenraum (4, 14) zwischen den beiden Schläuchen ergibt, **dadurch gekennzeichnet, dass** ein Unterdruck zur Lecküberwachung im Zwischenraum (4, 14) vorgesehen ist.

2. Schlauchleitung nach Anspruch 1 mit einem Anschlussstück mit einer Durchführung (7, 10, 20) für ein Überwachungsmedium sowie einer Durchführung (6, 24) für ein Fördermedium, wobei Anschlussmittel zur dichten Befestigung sowohl des Innenschlauchs (2, 12) als auch des Außenschlauchs (3, 13) vorgesehen sind, **dadurch gekennzeichnet, dass** eine Einschraubtülle (21) zur Befestigung und/oder Abdichtung des Innenschlauchs (12) vorgesehen ist.

3. Schlauchleitung nach Anspruch 1 oder 2, **dadurch gekennzeichnet, dass** eine Anschlusstülle (16) vorgesehen ist, auf die der Außenschlauch (13) aufschiebbar und in die der Innenschlauch (12) einschiebbar ist, wobei ein Hohlraum (18) zwischen der Anschlusstülle (16) und dem Innenschlauch (12) vorgesehen und der Hohlraum (18) gegenüber dem Innenschlauch (12) sowie nach außen abgedichtet ist.

4. Schlauchleitung nach einem der Ansprüche 1 bis 3, **dadurch gekennzeichnet, dass** eine Anschlussbohrung (20) mit den Hohlraum (18) in Verbindung steht.

5. Schlauchleitung nach einem der Ansprüche 1 bis 4, **dadurch gekennzeichnet, dass** die Einschraubtülle (21) mit endseitigen Anschlussmitteln (25, 26, 27) für weitere Baukomponenten versehen ist.

## Claims

1. Hose for a fuel dispenser of a petrol station, a tanker or the like, wherein a flexible inner hose (2, 12) is arranged in the interior of a flexible outer hose (3, 13), so an intermediate space (4, 14) is produced between two hoses, **characterised in that** a vacuum is provided in the intermediate space (4, 14) for leakage monitoring.

2. Hose according to claim 1, with a connecting piece with a conduit (7, 10, 20) for a monitoring means, and a conduit (6, 24) for a conveying medium, connecting means being provided for tight fastening of the inner hose (2, 12) and the outer hose (3, 13), **characterised in that** a screw-in socket (21) is provided for fastening and/or sealing the inner hose (12).

3. Hose according to claim 1 or 2, **characterised in that** a connecting socket (16) is provided, onto which the outer hose (13) can be pushed and into which the inner hose (12) can be pushed, a cavity (18) being provided between the connecting socket (16) and the inner hose (12) and the cavity (18) being sealed from the inner hose (12) and from the outside.

4. Hose according to any one of claims 1 to 3, **characterised in that** a connecting hole (12) communicates with the cavity (18).

5. Hose according to any of claims 1 to 4, **characterised in that** the screw-in socket (21) is provided with end connecting means (25, 26, 27) for further components.

## Revendications

1. Tuyau souple pour un dispositif de distribution de carburant d'un poste de ravitaillement en carburant, d'un véhicule citerne ou analogue, un tuyau interne souple (2, 12) étant agencé à l'intérieur d'un tuyau externe souple (3, 13), de sorte qu'il existe un espace intermédiaire (4, 14) entre les deux tuyaux,
**caractérisé en ce qu'**une dépression est prévue dans l'espace intermédiaire (4, 14) pour la surveillance de fuites.

2. Tuyau souple selon la revendication 1, comportant une pièce de raccordement avec un passage (7, 10, 20) pour un agent de surveillance, ainsi qu'un passage (6, 24) pour un agent de transport, des moyens de raccordement pour la fixation étanche aussi bien du tuyau interne (2, 12) qu'également du tuyau externe (3, 13) étant prévus,
**caractérisé en ce qu'**une douille filetée (21) est prévue pour la fixation et/ou l'étanchéification du tuyau interne (12).

3. Tuyau souple selon la revendication 1 ou 2,
**caractérisé en ce qu'**une douille de raccordement (16) est prévue, sur laquelle le tuyau externe (13) peut être enfilé et dans laquelle le tuyau interne (12) peut être inséré, une cavité (18) entre la douille de raccordement (16) et le tuyau interne (12) étant prévue et la cavité (18) étant étanchéifiée par rapport au tuyau interne (12) ainsi que vers l'extérieur.

4. Tuyau souple selon une des revendications 1 à 3,
**caractérisé en ce qu'**un perçage de raccordement (20) est relié à la cavité (18).

5. Tuyau souple selon une des revendications 1 à 4,
**caractérisé en ce que** la douille filetée (21) est munie de moyens de raccordement (25, 26, 27) du côté d'extrémité pour d'autres pièces.
